# EUROPEAN PATENT SPECIFICATION

(11) **EP 3 356 462 B1**
(45) Date of publication and mention of the grant of the patent: **20.05.2020**
(21) Application number: 15905483.2
(22) Date of filing: 30.09.2015
(51) Int. Cl.: C08L 7/00, B60C 1/00, C08K 3/00, C08K 3/08, C08L 9/00, C08K 3/013, C08K 5/00

(54) **A TIRE COMPRISING A RUBBER COMPOSITION**
REIFEN MIT EINER KAUTSCHUKZUSAMMENSETZUNG
PNEU COMPRENANT UNE COMPOSITION DE CAOUTCHOUC

(43) Date of publication of application: 08.08.2018
(73) Proprietor: Compagnie Générale des Etablissements Michelin, 63000 Clermont-Ferrand (FR)
(72) Inventor: DOTSON, Michael, Edward, Tokyo 163-1073 (JP); SHIRAISHI, Yu, Tokyo 156-0045 (JP)
(74) Representative: Regimbeau
(86) International application number: PCT/JP2015/078421
(87) International publication number: WO 2017/056331

(56) References cited:
- FR-A1- 2 939 724
- JP-A- 2005 132 865
- JP-A- 2010 006 365
- JP-A- 2012 512 090
- JP-A- 2013 531 714
- US-A1- 2002 193 490
- US-A1- 2005 096 418

## Description

### 1. Field of the invention

This invention relates to a tire comprising a rubber composition, said composition being intended to reduce the rolling resistance of the tire, while improving the productivities, and reducing the rolling noise.

### 2. Background

Government regulations and consumer preferences have continuously required a reduction of tire noise for tire manufactures who have provided different solutions which consist of modifying the formulation of rubber compositions themselves in order to reduce the noise.

Some proposals have been made to incorporate dense metal particles in rubber compositions forming or embedding on tires (see for instance, Patent Applications WO2010/069510, WO 2011/157514, US2010/0154966, US2002/193490, US2005/096418, and FR2939724).

These rubber compositions can reduce the tire noise, but there may degrade rolling resistance of the tire and/or the productivity.

### 3. Brief description of the invention

On the continuing their research, the applicants have discovered a novel and specific rubber composition forming a tire, the rubber composition comprising notably natural rubber, a prescribed amount of a liquid plasticizer and a prescribed amount of dense metal particles, which makes it possible to reduce rolling resistance of the tire, while to improve the productivity, and to reduce the noise.

Thus, a first subject of the invention is a tire comprising a rubber composition comprising at least, more than 50 phr and up to 100 phr of natural rubber as the first elastomer, 0 to less than 50 phr of a second diene elastomer which is different to the first diene elastomer, between 20 and 120 phr of a liquid plasticizer, less than 20 phr of a reinforcing filler having a density of less than 3 g/cm³, between 200 and 600 phr of metal particles having a density of between 4 and 20 g/cm³.

Moreover, aspects of the present invention can be as follows.
[1.] A tire comprising a rubber composition comprising at least:
   - more than 50 phr and up to 100 phr of natural rubber as a first diene elastomer;
   - 0 to less than 50 phr of a second diene elastomer which is different to the first diene elastomer;
   - between 20 and 120 phr of a liquid plasticizer;
   - between 200 and 600 phr of metal particles having a density of between 4 and 20 g/cm³; and
   - less than 20 phr of a reinforcing filler having a density of less than 3 g/ cm³.
[2.] The tire according to [1], wherein the content of the first diene elastomer is more than 80 phr and up to 100 phr, and the content of the second diene elastomer is 0 to less than 20 phr.
[3.] The tire according to [1] or [2], wherein the second diene elastomer is chosen from the group consisting of synthetic polyisoprenes, polybutadienes, butadiene copolymers, isoprene copolymers and the mixtures thereof.
[4.] The tire according to any one of [1] to [3], wherein the content of the liquid plasticizer is between 25 and 105 phr.
[5.] The tire according to any one of [1] to [4], wherein the liquid plasticizer is chosen from the group consisting of polyolefinic oils, naphthenic oils, paraffinic oils, Distillate Aromatic Extracts (DAE) oils, Medium Extracted Solvates (MES) oils, Treated Distillate Aromatic Extracts (TDAE) oils, Residual Aromatic Extracts (RAE) oils, Treated Residual Aromatic Extracts (TRAE) oils, Safety Residual Aromatic Extracts (SRAE) oil, mineral oils, vegetable oils, ether plasticizers, ester phosphate plasticizers, sulphonate plasticizers and the mixtures thereof.
[6.] The tire according to any one of [1] to [5], wherein the content of the metal particles is between 250 and 550 phr.
[7.] The tire according to any one of [1] to [6], wherein the density of the metal particles is between 4.5 and 15 g/cm³.
[8.] The tire according to any one of [1] to [7], wherein the BET surface area of the metal particles is between 0.1 and 20 m²/g.
[9.] The tire according to any one of [1] to [8], wherein the metal particles are metal microparticles.
[10.] The tire according to any one of [1] to [9], wherein power of hydrogen (pH) value of an aqueous suspension of the metal particles is between 4 and 10.
[11.] The tire according to any one of [1] to [10], wherein the metal is chosen from the group consisting of iron, copper, tin, zinc, tungsten, bismuth, cerium, neodymium and mixture thereof.
[12.] The tire according to any one of [1] to [11], wherein the metal particles are particles of metal oxide.
[13.] The tire according to [12], wherein the metal oxide is chosen from the group consisting of Fe₂O₃, ZnO, CuO, SnO₂, WO₃, CeO₂, Nd₂O₃, Bi₂O₃ and mixture thereof.
[14.] The tire according to [13], wherein the metal oxide is Fe₂O₃.
[15.] The tire according to any one of [1] to [14], wherein the reinforcing filler comprises silica or carbon black or a mixture thereof.
[16.] The tire according to any one of [1] to [15], wherein the content of the reinforcing filler is 0 to less than 10 phr.
[17.] The tire according to any one of [1] to [16], wherein the rubber composition further comprises between 0.1 and 15 phr of a coupling agent.
[18.] The tire according to [17], wherein the coupling agent is an organosilane or a polyorganosiloxane that is at least bifunctional.
[19.] The tire according to any one of [1] to [18], wherein the rubber composition exhibits, in the vulcanized state, a density of between 1.5 and 4.0 g/cm³.
[20.] The tire according to any one of [1] to [19], wherein a ratio of the content of the metal particles to the content of the liquid plasticizer is between 5 and 15.

The tires of the invention are particularly intended to equip passenger motor vehicles, including 4×4 (four-wheel drive) vehicles and SUV (Sport Utility Vehicles) vehicles, and also industrial vehicles in particular chosen from vans and heavy duty vehicles (i.e., bus or heavy road transport vehicles (lorries, tractors, trailers).

The invention relates to the above tire both in the uncured state (before curing) and in the cured state (after crosslinking or vulcanization).

The invention and its advantages will be easily understood in the light of the description and implementation examples which follow.

### 4. Detailed description of the invention

In the present description, any range of values denoted by the expression "between a and b" represents the field of values ranging from more than a to less than b (that is to say limits a and b excluded) whereas any range of values denoted by the expression "from a to b" means the field of values ranging from a up to b (that is to say including the strict limits a and b).

### 4-1. Formulation of the rubber composition

In the present description, unless expressly indicated otherwise, all the percentages (%) shown are % by weight. The abbreviation "phr" stands for parts by weight per hundred parts of elastomer (of the total of the elastomers if several elastomers are present). All the values of the glass transition temperature "Tg" are measured in a known manner by DSC (Differential Scanning calorimetry) according to the standard ASTM D3418 (1999).

The expression "based on" should be understood in the present application to mean a composition comprising the mixture and/or the product of the reaction of the various constituents used, some of the constituents being able or intended to react together, at least partly, during the various manufacturing phases of the composition, in particular during the vulcanization (curing).

### 4-1-1. Diene elastomer

It should be remembered that "diene" elastomer or rubber should be understood as meaning an elastomer resulting at least in part (i.e., a homopolymer or a copolymer) from diene monomers (monomers carrying two carbon-carbon double bonds which may or may not be conjugated).

Diene elastomers can be classified in a known way into two categories: those "essentially unsaturated" and those "essentially saturated". Butyl rubbers, such as, for example copolymers of dienes and of α-olefins of EPDM type, come within the category of essentially saturated diene elastomers, having a content of units of diene origin which is low or very low, always less than 15% (mol%). In contrast, essentially unsaturated diene elastomer is understood to mean a diene elastomer resulting at least in part from conjugated diene monomers, having a content of units of diene origin (conjugated dienes) which is greater than 15% (mol%). In the category of "essentially unsaturated" diene elastomers, "highly unsaturated" diene elastomer is understood to mean in particular a diene elastomer having a content of units of diene origin (conjugated dienes) which is greater than 50%.

The rubber composition forming the tire according to the present invention has an essential feature of comprising more than 50 phr to up to 100 phr of natural rubber elastomer as a first diene elastomer.

Advantageously, the rubber composition comprises more than 80 phr (more advantageously more than 90 phr) and up to 100 phr of the first elastomer, still more advantageously the content of the first elastomer is 100 phr.

Optionally, the rubber composition rubber may comprise 0 phr to less than 50 phr of a second diene elastomer which is different to the first elastomer.

Preferably the second diene elastomer is chosen from the group consisting of synthetic polyisoprene, polybutadienes, butadiene copolymers, isoprene copolymers and the mixture thereof. Such copolymers are more preferably chosen from the group consisting of styrene-butadiene copolymers (SBR), butadiene-isoprene copolymers (BIR), styrene-isoprene copolymers (SIR), styrene-butadiene- isoprene copolymers (SBIR) and mixtures of such copolymers.

Suitable butadiene monomers are in particular 1,3-butadiene, 2-methyl-1,3-butadiene, 2,3-di(Cl-C5 alkyl)-1,3-butadienes such as for example 2,3-dimethyl-1,3-butadiene, 2,3-diethyl-1,3-butadiene, 2-methyl-3-ethyl-1,3-butadiene or 2-methyl-3-isopropyl-1,3-butadiene and an aryl-1,3-butadiene. Suitable styrene monomers are in particular styrene, methylstyrenes, para-(tert-butyl)styrene, methoxystyrenes and chlorostyrenes.

Said copolymer based on styrene and on butadiene may have any microstructure, which is a function of the polymerization conditions used, in particular of the presence or absence of a modifying and/or randomizing agent and of the amounts of modifying and/or randomizing agents used. It may be, for example, a block, statistical, sequential or microsequential copolymer, and may be prepared in dispersion or in solution; it may be coupled and/or star-branched or else functionalized with a coupling and/or star-branching or functionalizing agent.

More preferably, the copolymer based on styrene and on butadiene is chosen from the group consisting of styrene-butadiene (abbreviated to SBR) copolymers, styrene-butadiene-isoprene (abbreviated to SBIR) copolymers and the mixtures thereof.

Still more preferably, an SBR copolymer is used. Among the SBR copolymers, mention may especially be made of those having a styrene content of between 5% and 60% by weight and more particularly of between 15% and 50%, a content (mol%) of 1,2- bonds of the butadiene part of between 4% and 75% and a content (mol%) of trans-1,4- bonds of between 10% and 80%. The Tg (glass transition temperature) of copolymer based on styrene and on butadiene is particularly from - 80°C to 0°C, more particularly from -80°C to -35°C, still more particularly from - 70°C to -40°C.

Especially suitable, among the latter, are polybutadiene (BR) homopolymers and in particular those having a content (mol%) of 1,2- units of between 4% and 80% or those having a content (mol%) of cis-1,4- units of greater than 80%; synthetic isoprene and those having a content (mol%) of cis-1,4-bonds preferably of greater than 90%, more preferably of greater than or equal to 98%, butadiene-isoprene copolymers (BIR) and especially those having an isoprene content of between 5% and 90% by weight and a Tg from -80°C to -40°C; and isoprene-styrene copolymers (SIR) and especially those having a styrene content of between 5% and 50% by weight and a Tg of between -50°C and -25°C.

Advantageously, the rubber composition comprises 0 phr to less than 20 phr (more advantageously 0 phr to less than 10 phr) of the second elastomer.

### 4-1-2. Plasticizing system

The rubber composition of the invention has as another essential characteristic that of comprising between 20 and 120 phr of a plasticizing agent which is liquid (at 20°C under atmospheric pressure), the role of which is to soften the matrix by diluting the elastomer and the reinforcing filler; its Tg is preferably less than -20°C, more preferably less than -40°C.

Below the indicated minimum content of liquid plasticizer, there is a risk of worsening processability due to high viscosity of the rubber composition, whereas above the recommended maximum content, there is a risk of degrading the rolling resistance of tire. For these reasons, this content is preferably between 25 and 105 phr, more preferably between 30 and 90 phr, still more preferably between 35 and 75 phr, particularly within a range from 40 to 60 phr.

Any extending oil, whether of aromatic or non-aromatic nature, any liquid plasticizing agent known for its plasticizing properties with regard to diene elastomers, can be used. At ambient temperature (20°C) under atmospheric pressure, these plasticizers or these oils, which are more or less viscous, are liquids (that is to say, as a reminder, substances that have the ability to eventually take on the shape of their container), as opposed, in particular, to plasticizing hydrocarbon resins which are by nature solid at ambient temperature.

Liquid plasticizers chosen from the group consisting of polyolefinic oils, naphthenic oils (low or high viscosity, in particular hydrogenated or otherwise), paraffinic oils, DAE (Distillate Aromatic Extracts) oils, MES (Medium Extracted Solvates) oils, TDAE oils (Treated Distillate Aromatic Extracts), RAE oils (Residual Aromatic Extracts), TRAE oils (Treated Residual Aromatic Extracts), SRAE oils (Safety Residual Aromatic Extracts), mineral oils, vegetable oils, ether plasticizers, ester plasticizers (for instance phosphate plasticizers), sulphonate plasticizers and the mixtures thereof are particularly suitable. Liquid plasticizers chosen from the group consisting of MES oils, vegetable oils and the mixtures thereof are more particularly suitable.

Mention may be made, as phosphate plasticizers for example, of those that contain between 12 and 30 carbon atoms, for example trioctyl phosphate. As examples of ester plasticizers, mention may especially be made of the compounds chosen from the group consisting of trimellitates, pyromellitates, phthalates, 1,2-cyclohexane dicarboxylates, adipates, azelates, sebacates, triesters of glycerol, and mixtures of these compounds.

Mention may be made of glycerol triesters, preferably composed predominantly (for more than 50% by weight, more preferably for more than 80% by weight) of an unsaturated C₁₈ fatty acid, that is to say an unsaturated fatty acid chosen from the group consisting of oleic acid, linoleic acid, linolenic acid and the mixtures of these acids. More preferably, whether of synthetic origin or natural origin (in the case, for example, of sunflower or rapeseed vegetable oils), the fatty acid used is composed for more than 50% by weight, more preferably still from 80% by weight, of oleic acid. Such triesters (trioleates) comprising a high content of oleic acid are well known. Among others, oleic sunflower oil is preferable.

### 4-1-3. Reinforcing filler

Use may be made of any type of reinforcing filler known for its capabilities of reinforcing a rubber composition which can be used for the manufacture of tires, for example an organic filler, such as carbon black, or a reinforcing inorganic filler, such as silica, with which a coupling agent is combined in a known way.

Such a reinforcing filler typically consists of nano particles, the mean size (by weight) of which is less than 500 nm, generally between 20 and 200 nm, in particular and preferably between 20 and 150 nm.

The density of this reinforcing filler is generally less than 3 g/cm³, in particular less than 2.5 g/cm³.

As essential feature, the rubber composition forming the tire according to the invention comprises 0 to less than 20 phr (that is, is devoid or comprising less than 20 phr) of a reinforcing filler.

Above the recommended maximum, there is a risk of increasing the hysteresis and therefore the rolling resistance of the tires. For this reason, the content of total reinforcing filler (carbon black and/or reinforcing inorganic filler) is preferably 0 to less than 10 phr, more preferably 0 to less than 5 phr, still more preferably equal to 0 phr.

All carbon blacks conventionally used in tires ("tire-grade" blacks) are suitable as carbon blacks. Mention will more particularly be made, among the latter, of the reinforcing carbon blacks of the 100, 200 or 300 series or of the blacks of the 500, 600 or 700 series (ASTM grades), such as, for example, the N115, N134, N234, N326, N330, N339, N347, N375, N550, N683 or N772 blacks. The carbon blacks might, for example, be already incorporated in the isoprene elastomer in the form of a masterbatch (see, for example, Applications WO 97/36724 or WO 99/ 16600).

Mention may be made, as examples of organic fillers other than carbon blacks, of the functionalized polyvinyl organic fillers as described in Applications WO 2006/ 069792, WO 2006/069793, WO2008/003434 and WO2008/003435.

The term "reinforcing inorganic filler" should be understood here as meaning any inorganic or mineral filler, whatever its colour and its origin (natural or synthetic), also known as "white filler" or sometimes "clear filler" in contrast to carbon black, capable of reinforcing by itself, without means other than an intermediate coupling agent, a rubber composition intended for the manufacture of tires, in other words capable of replacing, in its reinforcing role, a conventional tire-grade carbon black; such a filler is generally characterized, in a known way, by the presence of hydroxyl (-OH) groups at its surface.

Mineral fillers of the siliceous type, in particular silica (SiO₂), or of the aluminous type, in particular alumina (Al₂O₃), are suitable in particular as reinforcing inorganic fillers. The silica used can be any reinforcing silica known to a person skilled in the art, in particular any precipitated or pyrogenic silica exhibiting a BET surface and a CTAB specific surface both of less than 450 m²/g, preferably from 30 to 400 m²/g, in particular between 60 and 300 m²/g. Mention will be made, as highly dispersible ("HD precipitated silicas"), for example, of the Ultrasil 7000 and Ultrasil 7005 silicas from Evonik, the Zeosil 1165 MP, 1135 MP and 1115 MP silicas from Rhodia, the Hi-Sil EZ150G silica from PPG, the Zeopol 8715, 8745 and 8755 silicas from Huber. Mention may be made, as examples of reinforcing aluminas, of the "Baikalox A125" or "Baikalox CR125" aluminas from Bai'kowski, the "APA-100RDX" alumina from Condea, the "Aluminoxid C" alumina from Degussa or the "AKP-G015" alumina from Sumitomo Chemicals.

In order to couple the reinforcing inorganic filler to the diene elastomer, use can be made, in a well-known way, of an at least bifunctional coupling agent (or bonding agent) intended to provide a satisfactory connection, of chemical and/or physical nature, between the inorganic filler (surface of its particles) and the diene elastomer. Use is made, in particular, of bifunctional organosilanes or polyorganosiloxanes.

Use can be made in particular of silane polysulphides, referred to as "symmetrical" or "asymmetrical" depending on their specific structure, as described, for example, in Applications WO 03/002648 (or US 2005/016651) and WO 03/002649 (or US 2005/016650). "Symmetrical" silane polysulphides corresponding to the following general formula (I):

(I) Z - A - Sx - A - Z ,

in which:
x is an integer from 2 to 8 (preferably from 2 to 5);
A is a divalent hydrocarbon radical (preferably, C₁-C₁₈ alkylene groups or C₆-C₁₂ arylene groups, more particularly C₁-C₁₀, in particular C₁-C₄, alkylenes, especially propylene);

Z corresponds to one of the formulae below: 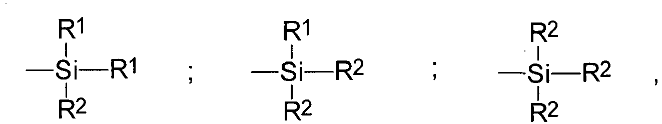 in which:
the R¹ radicals, which are unsubstituted or substituted and identical to or different from one another, represent a C₁-C₁₈ alkyl, C₅-C₁₈ cycloalkyl or C₆-C₁₈ aryl group (preferably, C₁-C₆ alkyl, cyclohexyl or phenyl groups, in particular C₁-C₄ alkyl groups, more particularly methyl and/or ethyl),
the R² radicals, which are unsubstituted or substituted and identical to or different from one another, represent a C₁-C₁₈ alkoxyl or C₅-C₁₈ cycloalkoxyl group (preferably a group chosen from C₁-C₈ alkoxyls and C₅-C₈ cycloalkoxyls, more preferably still a group chosen from C₁-C₄ alkoxyls, in particular methoxyl and ethoxyl), are suitable in particular, without the above definition being limiting. Mention will more particularly be made, as examples of silane polysulphides, of bis((C₁-C₄)alkoxyl(C₁-C₄)alkylsilyl(C₁-C₄)alkyl)polysulphides (in particular disulphides, trisulphides or tetrasulphides), such as, for example, bis(3-trimethoxysilylpropyl) or bis(3-triethoxysilylpropyl) polysulphides. Use is in particular made, among these compounds, of bis(3-triethoxysilylpropyl) tetrasulphide, abbreviated to TESPT, of formula [(C₂H₅O)₃Si(CH₂)₃S₂]₂, or bis(triethoxysilylpropyl)disulphide, abbreviated to TESPD, of formula [(C₂HSO)₃Si(CH₂)₃S]₂. Mention will also be made, as preferred examples, of bis(mono(C₁-C₄)alkoxyldi(C₁-C₄)alkylsilylpropyl) polysulphides (in particular disulphides, trisulphides or tetrasulphides), more particularly bis(monoethoxydimethylsilylpropyl) tetrasulphide, as described in Patent Application WO 02/083782 (or US 7 217 751).

Mention will in particular be made, as coupling agent other than alkoxysilane polysulphide, of bifunctional POSs (polyorganosiloxanes) or of hydroxysilane polysulphides (R² = OH in the above formula (I)), such as described in Patent Applications WO 02/30939 (or US 6 774 255) and WO 02/31041 (or US 2004/051210), or of silanes or POSs carrying azodicarbonyl functional groups, such as described, for example, in Patent Applications WO 2006/125532, WO 2006/125533 and WO 2006/125534.

As examples of other sulphide-containing silanes, mention will be made, for example, of the silanes bearing at least one thiol (-SH) function (referred to as mercaptosilanes) and/or at least one blocked thiol function, such as described, for example, in Patents or Patent applications U.S. Pat. No. 6,849,754, WO 99/09036, WO 2006/023815 or WO2007/098080.

Of course, use could also be made of mixtures of the coupling agents described previously, as described in particular in the aforementioned application WO 2006/125534.

In the rubber compositions forming the tire according to the present invention, if an inorganic reinforcing filler is used, the content of coupling agent is preferably between 0.1 and 20 phr, more preferably between 0.5 and 15 phr. If no reinforcing filler is used, the content of coupling agent is nevertheless and preferably between 0.1 and 15 phr, more preferably between 0.5 and 10 phr; it has been observed that, in the rubber matrix, the coupling agent may improve the dispersion(s) of the metal particles mentioned next chapter in detail. Also, the coupling agent may lower the viscosity of the rubber compositions.

A person skilled in the art will understand that a reinforcing filler of another nature, in particular organic nature, might be used as filler equivalent to the reinforcing inorganic filler described in the present section, provided that this reinforcing filler is covered with an inorganic layer, such as silica, or else comprises, at its surface, functional sites, in particular hydroxyls, requiring the use of a coupling agent in order to form the connection between the filler and the elastomer.

### 4-1-4. Metal particles

The rubber composition forming the tire according to the invention has the other essential feature of comprising between 200 and 600 phr of metal particles having a density of between 4 and 20 g/cm³.

Concerning the content and the density of the metal particles, below the minimums, it may be necessary to increase a volume fraction of the rubber composition in the tire in order to improve the tire noise, which may limit an architecture design of the tire, whereas above the recommended maximums, there is an issue of cost of such metal particles having over the maximum. For all these reason, this content is preferably between 250 and 550 phr, more preferably between 300 and 550 phr, still more preferably between 300 and 500 phr, particularly between 300 and 400 phr. The density is preferably between 5 and 10 g/cm³, more preferably between 5 and 7 g/cm³.

Various known methods are applicable for the measurement of the above density (specific gravity) of the metal particles. For example, by pycnometer, by Le Chatelier flask (see, for instance JIS Z 8807: 2012).

Preferably, the metal particle have a BET surface area of between 0.1 and 20 m²/g, more preferably between 0.5 and 16 m²/g, still more preferably between 1.0 and 5.0 m²/g.

The above BET surface area is measured according to a known method, that is, by gas adsorption using the Brunauer-Emmett-Teller method described in "The Journal of the American Chemical Society", Vol. 60, page 309, February 1938, and more specifically, in accordance with French standard NF ISO 9277 of December 1996 (multipoint volumetric method (5 points); where gas: nitrogen, degassing: 1 hour at 160°C., relative pressure range p/po: 0.05 to 0.17).

The metal particles are metallic (i.e., based on metal or on a metal derivative) particles; they preferably consist of metals such as alkaline-earth metals, transition metals or rare-earth metals, or else derivatives of such metals such as, for example sulphates, carbonates, sulphides, oxides and/or hydroxides, particularly oxides of such metals.

In the case of alkaline-earth metals, mention will be made in particular of barium and strontium. In the case of transition metals, mention will be made in particular of iron, copper, tin, zinc, molybdenum, silver, niobium, tungsten, rhenium, tantalum, hafnium, bismuth, and manganese. Finally, in the case of rare-earth metals, mention will be made in particular of lanthanum, neodymium, cerium or samarium.

Preferably, the metal particles are in the form of a metal or a metal derivative such as an oxide, are chosen from the group consisting of iron, copper, tin, zinc, tungsten, bismuth, cerium, neodymium and the mixtures thereof.

As examples of particularly preferred particles of metal oxides, mention may especially be made of those chosen from the group consisting of Fe₂O₃ (5.1 g/cm³), ZnO (5.7 g/cm³), CuO (6.3 g/cm³), SnO₂ (7.0 g/cm³), WO₃ (7.2 g/cm³), CeO₂ (7.3 g/cm³), Nd₂O₃ (7.2 g/cm³), Bi₂O₃ (8.9 g/cm³) and the mixtures thereof. Still more preferably, the metal oxide is chosen from the group consisting of Fe₂O₃, ZnO, CuO and the mixture thereof, particularly Fe₂O₃, more particularly α-Fe₂O₃.

Preferably, power of hydrogen (pH) value of an aqueous suspension of the metal particles is between 4 and 10. Below the indicated minimum, there is a risk of decelerating the curing speed of the tire comprising the tire comprising the rubber composition, which may lengthen the curing time of the tire, and may degrade the productivity of the tire, whereas above the maximum, there is risk of accelerating the curing speed, which makes it difficult to control curing condition of the tire, which may induce over-curing. All these reasons, the pH value is more preferably between 5 and 9.

The above pH is measured in accordance with ISO 787-9 (General methods of test for pigments and extenders - Part 9: Determination of pH value of an aqueous suspension) or JIS K5101-17-2 (Extraction method at normal temperature).

The metal particles may be introduced into the rubber composition according to various known processes, for example by compounding in solution, by bulk compounding in an internal mixer, or else by compounding via extrusion.

The metal particles may be in the form of powder, granules, beads or spheres.

According a specific embodiment, the metal particles are in the form of the isometric particles or anisometric particles (needle-shape, rod-shaped, ellipsoidal or amorphous particles).

They are preferably of micrometre size, i.e. it is in the form of "microparticles". Microparticles are understood to mean, by definition and in general, particles of micrometric size, that is to say for which the mean size or median size (both expressed by weight) are greater than or equal to one micrometre and less than 1 mm.

For the particle size analysis and the calculation of the median diameter of the particles, in particular microparticles, of the metal particles, various known methods can be applied, for example via laser scattering (for example, in accordance with ISO-8130-13 standard or JIS K5600-9-3 standard); it is also possible to simply use a particle size analysis via a mechanical screening through screens of different diameters. The median diameter (or median size) is ultimately calculated in a known manner from the histogram of the particle size distribution.

A ratio of the content of the metal particles to the content of the liquid plasticizer is preferably between 5 and 15, more preferably between 6.5 and 13.5, still more preferably between 8 and 12.

### 4-1-5. Various Additives

The rubber composition forming the tire according to the invention may also comprise all or some of the usual additives customarily used in the rubber compositions for tires, such as, for example, protective agents such as chemical antiozonants, antioxidants, filler other than those mentioned previously, for example platy filler (e.g. phyllosilicates such as kaolin, talc, graphite, clays or modified coclays), hydrocarbon plasticizing resins with a high Tg (preferably above 20°C, more preferably above 30°C), tacking resins, reinforcing resins (such as resorcinol or bismaleimide), methylene acceptors or methylene donors, a crosslinking system based either on sulphur or on sulphur donors and/or on peroxide and/or on bismaleimides, vulcanization accelerators and vulcanization activators.

### 4-2. Manufacture of the rubber composition

The rubber compositions forming the tire are manufactured in appropriate mixers using, for example, two successive preparation phases according to a general procedure well known to a person skilled in the art: a first phase of thermomechanical working or kneading (referred to as a "non-productive" phase) at high temperature, up to a maximum temperature of between 110°C and 190°C, preferably between 130°C and 180°C, followed by a second phase of mechanical working (referred to as a"productive" phase) at a lower temperature, typically below 110°C, for example between 40°C and 100°C, finishing phase during which the crosslinking or vulcanization system is incorporated.

A process that can be used for the manufacture of such rubber compositions comprises, for example, and preferably, the following stages:
- incorporating in the diene elastomer(s), in a mixer, less than 20 phr of the reinforcing filler, the liquid plasticizer, the metal particles, everything being kneaded thermomechanically, in one or more steps, until a maximum temperature of between 110°C and 190°C is reached;
- cooling the combined mixture to a temperature below 100°C;
- s subsequently incorporating, during a second stage ("productive" stage), a crosslinking system;
- kneading everything up to a maximum temperature of less than 120°C;
- extruding or calendering the rubber composition thus obtained.

By way of example, the first (non-productive) phase is carried out in a single thermomechanical stage during which all the necessary constituents are introduced into an appropriate mixer, such as a standard internal mixer, followed, in a second step, for example after kneading for 1 to 2 minutes, by the other additives, optional additional filler-covering agents or processing aids, with the exception of the crosslinking system. The total kneading time, in this non-productive phase, is preferably between 1 and 15 min.

After cooling the mixture thus obtained, the crosslinking system is then incorporated at low temperature (for example, between 40°C and 100°C), generally in an external mixer, such as an open mill; The combined mixture is then mixed (the second (productive) phase) for a few minutes, for example between 2 and 15 min.

The crosslinking system proper is preferably based on sulphur and on a primary vulcanization accelerator, in particular on an accelerator of sulphenamide type. Added to this vulcanization system are various known secondary accelerators or vulcanization activators, such as zinc oxide, stearic acid, guanidine derivatives (in particular diphenylguanidine), and the like, incorporated during the first non-productive phase and/or during the productive phase. The content of sulphur is preferably between 0.5 and 5.0 phr, and that of the primary accelerator is preferably between 0.5 and 8.0 phr.

Use may be made, as accelerator (primary or secondary) of any compound capable of acting as accelerator of the vulcanization of diene elastomers in the presence of sulphur, in particular accelerators of the thiazoles type and their derivatives, accelerators of thiurams types, or zinc dithiocarbamates. These accelerators are more preferably chosen from the group consisting of 2-mercaptobenzothiazyl disulphide (abbreviated to "MBTS"), N-cyclohexyl-2-benzothiazole sulphenamide (abbreviated to "CBS"), N,N-dicyclohexyl-2 benzothiazolesulphenamide ("DCBS"), N-ter't-butyl-2-benzothiazolesulphenamide ("TBBS"), N-tert-butyl-2 benzothiazolesulphenimide ("TBSI"), zinc dibenzyldithiocarbamate ("ZBEC"), Tetrabenzylthiuram disulfide ("TBZTD") and the mixtures thereof.

The rubber composition thus obtained is subsequently calendered, for example in the form of a sheet or of a plaque, in particular for laboratory characterization, or else extruded in the form of a rubber profiled element which can be used directly as a rubber component of a tire.

The vulcanization (or curing) is carried out in a known way at a temperature generally of between 110°C and 190°C for a sufficient time which can vary, for example, between 5 and 90 min depending in particular on the curing temperature, the vulcanization system adopted and the vulcanization kinetics of the composition under consideration.

Preferably, the rubber composition has, in the vulcanized state (i.e. after curing), a density that is between 1.5 and 4.0 g/cm³, more preferably between 1.7 and 3.2 g/cm³, still more preferably from 2.0 to 2.5 g/cm³.

Various known methods are applicable for the measurement of the above density (specific gravity) of the rubber composition. For example, hydrostatic method (see, for example ISO-2781, ASTM D297 and ASTM D792).

### 4-3. Tire of the invention

As a tire has a geometry of revolution about an axis of rotation, the geometry of the tire is generally described in a meridian plane containing the axis of rotation of the tire, and the following definitions of directions of the tire are understood in the present application:
- A radial direction is a direction perpendicular to the axis of rotation of the tire;
- An axial direction is a direction parallel to the axis of rotation of the tire;
- A circumferential direction is a direction perpendicular to the meridian plane.

A plane being perpendicular to the axis of rotation of the tire and passing through the middle of a tread surface of the tire is referred to as an equatorial plane of the tire.

In what follows, expressions "radially", "axially" and "circumferentially" respectively mean "in the radial direction", "in the axial direction" and "in the circumferential direction". Expressions "radially on the inside (radially inner or radially internal), or respectively radially on the outside (radially outer or radially external)" mean "closer or, respectively, further away, from the axis of rotation of the tire, in the radial direction, than". Expressions "axially on the inside (axially inner or axially interior) or respectively axially on the outside (axially outer or axially exterior)" mean "closer or, respectively further away, from the equatorial plane, in the axial direction, than". Respective dimensions of a given element in the radial, axial and circumferential directions will also be denoted "radial thickness or height", "axial width" and "circumferential length" of this element.

In general, a tire comprises a crown prolonged by two sidewalls, the sidewalls being ended by two beads, and the beads. The following definitions of portions of the tire are understood:
- The crown is a portion of the tire, and comprises a tread intended to come into contact with a ground surface during running of the tire;
- The sidewall is a portion of the tire, usually of low flexural stiffness, located between the crown and the bead;
- The bead may be an essentially inextensible portion of the tire internally radially adjacent to the sidewall and the base of which is intended to be mounted on a rim seat of a vehicle wheel;
- A carcass reinforcement is a portion of the tire, passing into the crown and the sidewalls and being anchored in the beads. The carcass reinforcement may be formed at least one ply reinforced by radial textile cords forming an angle of between 80° and 90° with the meridian plane;
- A crown reinforcement is a portion of the tire, reinforcing the crown of the tire and placed circumferentially between the carcass reinforcement and the tread of the tire;
- An inner liner is a portion of the tire, defining a radially inner face of the tire and intended to protect the carcass reinforcement from diffusion of air coming from a space inside the tire.

The rubber composition described previously is therefore used, in the tire of the invention. Embodiments of the tire according to the present invention can be as follows.
- A tire comprising an inner wall, a rubber component placed circumferentially and continuously or non-continuously on the inner wall, the rubber component comprising the rubber composition described previously.
- A tire comprising an inner rubber layer that defines a radially inner face of the pneumatic tire in contact with an inflation cavity, a rubber component embedded circumferentially in the inner rubber layer, wherein the rubber component comprises the rubber composition described previously.
- A tire comprising a crown prolonged by two sidewalls, the sidewalls ended by two beads, the two beads, a carcass reinforcement passing into the crown and the sidewalls and being anchored in the beads, an inner rubber layer defining a radially inner face of the pneumatic tire in contact with an inflation cavity, a rubber component placed circumferentially between the inner rubber layer and the carcass reinforcement, wherein the rubber component comprises the rubber composition described previously, preferably the rubber component is placed in the crown, in the sidewall and/or around the beads.
- A tire comprising a crown prolonged by two sidewalls, the sidewalls being ended by two beads, the two beads, a carcass reinforcement passing into the crown and the sidewalls and being anchored in the beads, the crown comprising a tread having a rolling surface intended to come into contact with a ground surface during running of the pneumatic tire, a crown reinforcement reinforcing the crown and being placed circumferentially between the carcass reinforcement and the tread, a rubber component placed circumferentially between the carcass reinforcement and the crown reinforcement, wherein the rubber component comprises the rubber composition described previously.
- A tire comprising a crown prolonged by two sidewalls, the sidewalls ended by two beads, the two beads, a carcass reinforcement passing into the crown and the sidewalls and being anchored in the beads, the crown comprising a tread having a rolling surface intended to come into contact with a ground surface during running of the pneumatic tire, a crown reinforcement reinforcing the crown and being placed circumferentially between the carcass reinforcement and the tread, a rubber component placed circumferentially between the crown reinforcement and the tread, wherein the rubber component comprises the rubber composition described previously.
- A tire comprising a crown prolonged by two sidewalls, the sidewalls ended by two beads, the two beads, a carcass reinforcement passing into the crown and the sidewalls and anchored in the beads, the crown comprising a tread having a rolling surface intended to come into contact with a ground surface during running of the pneumatic tire, a crown reinforcement reinforcing the crown and being placed circumferentially between the carcass reinforcement and the tread, a rubber component placed circumferentially between the carcass reinforcement and the tread and positioned axially outer than the crown reinforcement, wherein the rubber component comprises the rubber composition described previously.
- A tire comprising a crown prolonged by two sidewalls, the sidewalls ended by two beads, the two beads, a carcass reinforcement passing into the crown and the sidewalls and being anchored in the beads, a rubber component placed radially outer than the carcass reinforcement and positioned circumferentially in the sidewall or around the beads, wherein the rubber component comprises the rubber composition described previously.
- A tire comprising a crown prolonged by two sidewalls, the sidewalls ended by two beads, the two beads, a carcass reinforcement passing into the crown and the sidewalls and being anchored in the beads, a rubber component placed circumferentially between the carcass reinforcement and each of the beads, wherein the rubber component comprises the rubber composition described previously.

In each of the above embodiments of the tire according to the present invention, the rubber component can comprise a plurality of rubber layers, wherein each of the rubber layer is embedded into or radially attached to the other rubber layer(s), at least one of the rubber layers comprises the rubber composition described previously.

### 5. Measurements and tests used

The rubber composition forming the tire according to the present invention including examples are characterized and tested before and after curing, as indicated below.

### 5-1. Mooney plasticity

Use is made of an oscillating consistometer as described in French Standard NF T 43 005 (November 1980). The Mooney plasticity measurement is carried out according to the following principle: the composition in the raw state (i.e., before curing) is moulded in a cylindrical chamber heated to 100°C. After preheating for one minute, the rotor rotates within the test specimen at 2 revolutions/minute and the working torque for maintaining this movement is measured after rotating for 4 minutes. The Mooney plasticity (ML 1+4) is expressed in "Mooney unit" (MU, with 1 MU = 0.83 Newton.metre).

### 5-2. - Dynamic properties

The dynamic properties tan(δ)ₘₐₓ and ΔG* are measured on a viscosity analyser (Metravib VA4000) in accordance with Standard ASTM D 5992-96. The response of a sample of vulcanized composition (cylindrical test specimen with a thickness of 4 mm and with a cross section of 400 mm²), subjected to a simple alternating sinusoidal shear stress, at a frequency of 10 Hz, under the standard temperature conditions (23° C) in accordance with Standard ASTM D 1349-99, is recorded. A peak-to-peak strain amplitude sweep is carried out from 0.1% to 50% (outward cycle) and then from 50% to 0.1% (return cycle). The results made use of are the complex dynamic shear modulus (G*) and the loss factor tan δ. The maximum value of tan δ observed (tan(δ)ₘₐₓ), and the difference in complex modulus (ΔG*) between the values at 0.1% and 50% strain (Payne effect), are shown for the return cycle.

### 6. Examples of the implementation of the invention

### 6-1. Preparation of the rubber compositions

The tests which follow were carried out in the following way: the liquid plasticizer, the metal particles, the diene elastomer(s), and the various other ingredients, with the exception of the vulcanization system, were successively introduced into an internal mixer having an initial vessel temperature of approximately 60°C; the mixer was thus approximately 70% full (% by volume). Thermomechanical working (non-productive phase) was then carried out in one stage, which lasts in total approximately 2 to 4 minutes, until a maximum "dropping" temperature of 165°C is reached. The mixture thus obtained was recovered and cooled and then sulphur and an accelerator of sulphenamide type were incorporated on an external mixer (homofinisher) at 30°C, everything being mixed (productive phase) for an appropriate time (for example between 5 and 12 min).

The compositions thus obtained were subsequently calendered, either in the form of sheets (thickness of 2 to 3 mm) or of fine sheets of rubber, for the measurement of their physical or mechanical properties, or in the form of profiled elements which could be used directly, after cutting and/or assembling to the desired dimensions, for example as tire semi-finished products.

### 6-2. Rubber tests

In these tests, eleven compositions (identified as C-1 to C-11) were compared:
- Composition C-1: A composition based on natural rubber (NR), comprising metal particles (Fe₂O₃ particles) without liquid plasticizer (a reference);
- Compositions C-2, C-3, C-4, C-7 and C-8: Compositions based on natural rubber (NR), comprising the metal particles, the liquid plasticizer (examples according to the present invention);
- Compositions C-5 and C-9: Compositions based on natural rubber (NR), comprising the metal particles, the liquid plasticizer and silane (examples according to the present invention);
- Compositions C-6: A composition based on 60 phr of natural rubber (NR) and 40 phr of a butadiene rubber, comprising the metal particles, the liquid plasticizer (a example according to the present invention);
- Compositions C-10: A composition based on the butadiene rubber (BR), comprising the metal particles, the liquid plasticizer (a comparative example);
- Compositions C-11: A composition based on a synthetic polyisoprenes (IR), comprising the metal particles, the liquid plasticizer (another comparative example).

The rubber compositions according to the invention C-2 to C-8, and these comparative examples C-10 and C-11 have a density of about 2.2 g/cm³. Others (C-1 and C-9) have a density of about 2.5 g/cm³.

The formulations of the four compositions (Table 1 - contents of the various products expressed in phr) and their properties before/after curing are given in Tables 1, 2 and 3; the vulcanization system is composed of sulphur and sulphenamide.

Table 2 shows the results of Mooney plasticity are relative data: a decrease with respect to the reference arbitrarily set at 100 indicates a decrease in the value of Mooney unit; one can note that each of the rubber compositions according to the invention C-2 to C-9, comprising more than 50 phr and up to 100 phr of natural rubber and more than 20 phr of the liquid plasticizer, exhibits a significantly improved processability of the rubber composition (low Mooney value) in comparison with the reference C-1 and the comparative examples.

Table 3 shows the results of dynamic properties are in relative data: a decrease with respect to the reference arbitrarily set at 100 indicates a decrease in the hysteresis of material and thus of the rolling resistance. The table shows that each of the compositions according to the present invention C-2 to C-9, compared with the reference C-1 and the comparative examples, exhibits a markedly improved (that is reduced) hysteresis, as is shown by the relative data (tan(δ)ₘₐₓ, and ΔG*), which is the recognized indicator of a reduction in the rolling resistance of tires and consequently in the energy consumption of the motor vehicles equipped with such tires.

**Table 1**

| Rubber Composition No.: | Ref | Examples of the invention | | | | | | | | Comparative examples | |
|---|---|---|---|---|---|---|---|---|---|---|---|
| | C-1 | C-2 | C-3 | C-4 | C-5 | C-6 | C-7 | C-8 | C-9 | C-10 | C-11 |
| NR (1) | 100 | 100 | 100 | 100 | 100 | 60 | 100 | 100 | 100 | | |
| BR (2) | | | | | | 40 | | | | 100 | |
| IR (3) | | | | | | | | | | | 100 |
| Non aromatic oil (4) | | 40 | 40 | | | | 80 | 80 | 55 | | 40 |
| Non aromatic oil (5) | | | | 40 | 40 | 40 | | | | 40 | |
| Metal particles (6) | 350 | 350 | | 350 | 350 | 350 | 450 | | | 350 | 350 |
| Metal particles (7) | | | 350 | | | | | 450 | 545 | | |
| Silane (8) | | | | | 8 | | | | 0.8 | | |
| ZnO | 2 | 2 | 2 | 2 | 2 | 2 | 2 | 2 | 2 | 2 | 2 |
| Stearic acid | 0.2 | 0.2 | 0.2 | 0.2 | 0.2 | 0.2 | 0.2 | 0.2 | 0.2 | 0.2 | 0.2 |
| Antioxidant (9) | 2 | 2 | 2 | 2 | 2 | 2 | 2 | 2 | 2 | 2 | 2 |
| Sulphur | 1.3 | 1.3 | 1.3 | 1.3 | 1.3 | 1.3 | 1.3 | 1.3 | 1.3 | 1.3 | 1.3 |
| Accelerator (10) | 1 | 1 | 1 | 1 | 1 | 1 | 1 | 1 | 1 | 1 | 1 |

| | | | | | | | | | | | |
|---|---|---|---|---|---|---|---|---|---|---|---|
| (1) Natural rubber (peptised); (2) Polybutadiene with 0.3% of 1,2 vinyl; 2.7% of trans; 97% of cis-1,4 (Tg = -105°C); (3) Polyisoprene rubber "IR2200" from ZEON (98% of cis-1,4, Tg: -62°C); (4) MES oil ("Catenex SNR" from Shell) (5) Oleic sunflower oil ("Agripure 80" from Cargiil, Weight percent oleic acid: 100%); (6) Particles of Iron (III) oxide: "R-MR" from Titan Kogyo. Ltd. (BET surface area: 4.8 m²/g, α-Fe₂O₃: 99%, pH: 5.5±1.0, mean particle size by weight: 13.6 µm); (7) Particles of Iron (III) oxide "R-110-7" from Titan Kogyo. Ltd. (BET surface area: 2.7 m²/g, α-Fe₂O₃: 99%, pH: 5.5±1.0, mean particle size by weight: 1.11 µm); (8) Coupling agent TESPT ("Si69" from Evonik); (9) N-(1,3-dimethylbutyl)-N-phenyl-para-phenylenediamine ("Santoflex 6-PPD" from Flexsys); (10) N-dicyclohexyl-2-benzothiazolesulphenamide ("Santocure CBS" from Flexsys). | | | | | | | | | | | |

**Table 2**

| Rubber Composition No.: | Ref | Examples of the invention | | | | | | | | Comparative examples | |
|---|---|---|---|---|---|---|---|---|---|---|---|
| | C-1 | C-2 | C-3 | C-4 | C-5 | C-6 | C-7 | C-8 | C-9 | C-10 | C-11 |
| Mooney (11) | 100 | 38 | 31 | 38 | 26 | 50 | 20 | 19 | 47 | 61 | 55 |

| | | | | | | | | | | | |
|---|---|---|---|---|---|---|---|---|---|---|---|
| (11) Mooney value [C-n]/Mooney value [C-1]× 100, where: n=1 to 11. | | | | | | | | | | | |

**Table 3**

| Rubber Composition No.: | Ref | Examples of the invention | | | | | | | | Comparative examples | |
|---|---|---|---|---|---|---|---|---|---|---|---|
| | C-1 | C-2 | C-3 | C-4 | C-5 | C-6 | C-7 | C-8 | C-9 | C-10 | C-11 |
| Tan (δ)ₘₐₓ at 23°C (12) | 100 | 60 | 52 | 53 | 61 | 61 | 65 | 57 | 93 | 130 | 145 |
| ΔG*(13) | 100 | 6 | 4 | 6 | 3 | 14 | 3 | 2 | 11 | 65 | 83 |

| | | | | | | | | | | | |
|---|---|---|---|---|---|---|---|---|---|---|---|
| (12) Tan(δ)ₘₐₓ [C-n]/Tan(δ)ₘₐₓ [C-1]×100, where: n=1 to 11; (13) ΔG* [C-n]/ΔG* [C-1]×100, where: n=1 to 11. | | | | | | | | | | | |

## Claims

1. A tire comprising a rubber composition comprising at least:
- more than 50 phr and up to 100 phr of natural rubber as a first diene elastomer;
- 0 to less than 50 phr of a second diene elastomer which is different to the first diene elastomer;
- between 20 and 120 phr, preferably between 25 and 105 phr, of a liquid plasticizer;
- between 200 and 600 phr of metal particles having a density of between 4 and 20 g/cm³; and
- less than 20 phr of a reinforcing filler having a density of less than 3 g/cm³.

2. The tire according to Claim 1, wherein the content of the first diene elastomer is more than 80 phr and up to 100 phr, and the content of the second diene elastomer is 0 to less than 20 phr.

3. The tire according to Claim 1 or Claim 2, wherein the second diene elastomer is chosen from the group consisting of synthetic polyisoprenes, polybutadienes, butadiene copolymers, isoprene copolymers and the mixtures thereof.

4. The tire according to any one of Claims 1 to 3, wherein the liquid plasticizer is chosen from the group consisting of polyolefinic oils, naphthenic oils, paraffinic oils, Distillate Aromatic Extracts (DAE) oils, Medium Extracted Solvates (MES) oils, Treated Distillate Aromatic Extracts (TDAE) oils, Residual Aromatic Extracts (RAE) oils, Treated Residual Aromatic Extracts (TRAE) oils, Safety Residual Aromatic Extracts (SRAE) oil, mineral oils, vegetable oils, ether plasticizers, ester phosphate plasticizers, sulphonate plasticizers and the mixtures thereof.

5. The tire according to any one of Claims 1 to 4, wherein the content of the metal particles is between 250 and 550 phr.

6. The tire according to any one of Claims 1 to 5, wherein the density of the metal particles is between 4.5 and 15 g/cm³.

7. The tire according to any one of Claims 1 to 6, wherein the BET surface area of the metal particles is between 0.1 and 20 m²/g.

8. The tire according to any one of Claims 1 to 7, wherein the metal particles are metal microparticles.

9. The tire according to any one of Claims 1 to 8, wherein power of hydrogen (pH) value of an aqueous suspension of the metal particles is between 4 and 10.

10. The tire according to any one of Claims 1 to 9, wherein the metal is chosen from the group consisting of iron, copper, tin, zinc, tungsten, bismuth, cerium, neodymium and mixture thereof.

11. The tire according to any one of Claims 1 to 10, wherein the metal particles are particles of metal oxide.

12. The tire according to Claim 11, wherein the metal oxide is chosen from the group consisting of Fe₂O₃, ZnO, CuO, SnO₂, WO₃, CeO₂, Nd₂O₃, Bi₂O₃ and mixture thereof, preferably Fe₂O₃.

13. The tire according to any one of Claims 1 to 12, wherein the rubber composition further comprises between 0.1 and 15 phr of a coupling agent, preferably an organosilane or a polyorganosiloxane that is at least bifunctional.

14. The tire according to any one of Claims 1 to 13, wherein the rubber composition exhibits, in the vulcanized state, a density of between 1.5 and 4.0 g/cm³.

15. The tire according to any one of Claims 1 to 14, wherein a ratio of the content of the metal particles to the content of the liquid plasticizer is between 5 and 15.

## Patentansprüche

1. Reifen, umfassend eine Gummizusammensetzung, umfassend wenigstens:
mehr als 50 phr und bis zu 100 phr natürliches Gummi als ein erstes Dien-Elastomer;
0 bis weniger als 50 phr eines zweiten Dien-Elastomers, das von dem ersten Dien-Elastomer unterschiedlich ist;
zwischen 20 und 120 phr, bevorzugt zwischen 25 und 105 phr, eines flüssigen Weichmachers;
zwischen 200 und 600 phr Metallpartikel mit einer Dichte zwischen 4 und 20 g/cm3; und
weniger als 20 phr eines Verstärkungsfüllstoffs mit einer Dichte von weniger als 3 g/cm3.

2. Reifen gemäß Anspruch 1, wobei der Gehalt an dem ersten Dien-Elastomer mehr als 80 phr und bis zu 100 phr und der Gehalt an dem zweiten Dien-Elastomer 0 bis weniger als 20 phr beträgt.

3. Reifen gemäß Anspruch 1 oder Anspruch 2, wobei das zweite Dien-Elastomer ausgewählt ist aus der Gruppe bestehend aus synthetischen Polyisopropenen, Polybutadienen, Butadien-Kopolymeren, Isopropen-Kopolymeren und den Mischungen davon.

4. Reifen gemäß irgendeinem der Ansprüche 1 bis 3, wobei der flüssige Weichmacher aus der Gruppe ausgewählt ist, bestehend aus Polyolefinölen, Naphthenölen, Paraffinölen, Aromatenextrakten aus Destillat- (DAE)-Ölen, Solvatextrakten aus Flüssigkeiten- (MES) -Ölen, Behandelten Aromatenextrakten aus Destillat- (TDAE) -Ölen, Aromaten-Restextrakt- (RAE) -Ölen, Behandelten Aromatenrestextrakt-(TRAE) -Ölen, Aromatensicherheits-Restextrakt- (SRAE)-Ölen, Mineralölen, Pflanzenölen, ätherischen Weichmachern, Ester-Phosphatweichmachern, Phosphat-Weichmachern, Sulfonat-Weichmachern und den Mischungen davon.

5. Reifen gemäß irgendeinem der Ansprüche 1 bis 4, wobei der Gehalt an Metallpartikeln zwischen 250 und 550 phr beträgt.

6. Reifen gemäß irgendeinem der Ansprüche 1 bis 5, wobei die Dichte der Metallpartikel zwischen 4,5 und 15 g/cm3 beträgt.

7. Reifen gemäß irgendeinem der Ansprüche 1 bis 6, wobei der BET-Oberflächenbereich der Metallpartikel zwischen 0,1 und 20 m2/g beträgt.

8. Reifen gemäß irgendeinem der Ansprüche 1 bis 7, wobei die Metallpartikel Metallmikropartikel sind.

9. Reifen gemäß irgendeinem der Ansprüche 1 bis 8, wobei der ph-Wert einer flüssigen Suspension der Metallpartikel zwischen 4 und 10 beträgt.

10. Reifen gemäß irgendeinem der Ansprüche 1 bis 9, wobei das Metall ausgewählt ist aus der Gruppe bestehend aus Eisen, Kupfer, Zinn, Zink, Wolfram, Wismut, Zer, Neodymium und der Mischung davon.

11. Reifen gemäß irgendeinem der Ansprüche 1 bis 10, wobei die Metallpartikel Partikel aus Metalloxid sind.

12. Reifen gemäß Anspruch 11, wobei das Metalloxid aus der Gruppe ausgewählt ist, bestehend aus Fe2O3, ZnO, CuO, SnO2, WO3, CeO2, Nd2O3, Bi2O3 und der Mischung davon, bevorzugt Fe2O3.

13. Reifen gemäß irgendeinem der Ansprüche 1 bis 12, wobei die Gummizusammensetzung weiterhin zwischen 0,1 und 15 phr eines Kopplungswirkstoffs, bevorzugt eines Organosilans oder eines Polyorganosilans umfasst, das wenigstens bifunktional ist.

14. Reifen gemäß irgendeinem der Ansprüche 1 bis 13, wobei die Gummidichte im vulkanisierten Zustand eine Dichte zwischen 1,5 und 4,0 g/cm3 aufweist.

15. Reifen gemäß irgendeinem der Ansprüche 1 bis 14, wobei das Verhältnis des Gehaltes an Metallpartikeln zum Gehalt am flüssigen Weichmacher zwischen 5 und 15 beträgt.

## Revendications

1. Pneumatique comprenant une composition caoutchouteuse comprenant au moins :
- plus de 50 pcc et jusqu'à 100 pcc de caoutchouc naturel en tant que premier élastomère de diène ;
- 0 à moins de 50 pcc d'un deuxième élastomère de diène qui est différent du premier élastomère de diène ;
- entre 20 et 120 pcc, de préférence entre 25 et 105 pcc, d'un plastifiant liquide ;
- entre 200 et 600 pcc de particules de métal présentant une densité entre 4 et 20 g/cm³ ; et
- moins de 20 pcc d'une charge de renfort présentant une densité de moins de 3 g/cm³.

2. Pneumatique selon la revendication 1, dans lequel la teneur en premier élastomère de diène fait plus de 80 pcc et jusqu'à 100 pcc, et la teneur en deuxième élastomère de diène est de 0 à moins de 20 pcc.

3. Pneumatique selon la revendication 1 ou la revendication 2, dans lequel le deuxième élastomère de diène est choisi à partir du groupe constitué de polyisoprènes, de polybutadiènes, de copolymères de butadiène, de copolymères d'isoprène synthétiques et des mélanges de ceux-ci.

4. Pneumatique selon l'une quelconque des revendications 1 à 3, dans lequel le plastifiant liquide est choisi à partir du groupe constitué d'huiles polyoléfiniques, d'huiles naphténiques, d'huiles paraffiniques, d'huiles d'extraits aromatiques de distillat (DAE), d'huiles de solvates extraits moyens (MES), d'huiles d'extraits aromatiques de distillat traités (TDAE), d'huiles d'extraits aromatiques résiduels (RAE), d'huiles d'extraits aromatiques résiduels traités (TRAE), d'huiles d'extraits aromatiques résiduels de sécurité (SRAE), d'huiles minérales, d'huiles végétales, de plastifiants d'éther, de plastifiants d'ester de phosphate, de plastifiants de sulfonate et des mélanges de ceux-ci.

5. Pneumatique selon l'une quelconque des revendications 1 à 4, dans lequel la teneur en particules de métal est entre 250 et 550 pcc.

6. Pneumatique selon l'une quelconque des revendications 1 à 5, dans lequel la densité des particules de métal est entre 4,5 et 15 g/cm³.

7. Pneumatique selon l'une quelconque des revendications 1 à 6, dans lequel la superficie BET des particules de métal est entre 0,1 et 20 g/cm².

8. Pneumatique selon l'une quelconque des revendications 1 à 7, dans lequel les particules de métal sont des microparticules de métal.

9. Pneumatique selon l'une quelconque des revendications 1 à 8, dans lequel la valeur de potentiel d'hydrogène (pH) d'une suspension aqueuse des particules de métal est entre 4 et 10.

10. Pneumatique selon l'une quelconque des revendications 1 à 9, dans lequel le métal est choisi à partir du groupe constitué de fer, de cuivre, d'étain, de zinc, de tungstène, de bismuth, de cérium, de néodyme et de mélanges de ceux-ci.

11. Pneumatique selon l'une quelconque des revendications 1 à 10, dans lequel les particules de métal sont des particules d'oxyde de métal.

12. Pneumatique selon la revendication 11, dans lequel l'oxyde de métal est choisi à partir du groupe constitué de Fe₂O₃, de ZnO, de CuO, de SnO₂, de WO₃, de CeO₂, de Nd₂O₃, de Bi₂O₃ et de mélanges de ceux-ci, de préférence de Fe₂O₃.

13. Pneumatique selon l'une quelconque des revendications 1 à 12, dans lequel la composition caoutchouteuse comprend en outre entre 0,1 et 15 pcc d'un agent de couplage, de préférence un organosilane ou un polyorganosiloxane qui est au moins bifonctionnel.

14. Pneumatique selon l'une quelconque des revendications 1 à 13, dans lequel la composition caoutchouteuse présente, à l'état vulcanisé, une densité entre 1,5 et 4,0 g/cm³.

15. Pneumatique selon l'une quelconque des revendications 1 à 14, dans lequel un rapport de la teneur en particules de métal sur la teneur du plastifiant liquide est entre 5 et 15.
